# EUROPÄISCHE PATENTSCHRIFT

(11) **EP 1 114 301 B1**
(45) Veröffentlichungstag und Bekanntmachung des Hinweises auf die Patenterteilung: **06.08.2003**
(21) Anmeldenummer: 99944520.8
(22) Anmeldetag: 26.08.1999
(51) Int. Cl.: G01K 13/00

(54) **VERFAHREN ZUR BESTIMMUNG EINER TEMPERATUR SOWIE STRAHLUNGSTHERMOMETER MIT MEHREREN INFRAROT-SENSORELEMENTEN**
METHOD FOR DETERMINING TEMPERATURE, RADIATION THERMOMETER WITH SEVERAL INFRARED SENSOR ELEMENTS
PROCEDE POUR DETERMINER UNE TEMPERATURE ET THERMOMETRE A RAYONNEMENT COMPORTANT PLUSIEURS ELEMENTS DE DETECTION DE RAYONNEMENT INFRAROUGE

(30) Priorität: 16.09.1998 DE 19842402; 11.12.1998 DE 19857145
(43) Veröffentlichungstag der Anmeldung: 11.07.2001
(73) Patentinhaber: Braun GmbH, 61476 Kronberg (DE)
(72) Erfinder: KRAUS, Bernhard, D-35619 Braunfels (DE); BEERWERTH, Frank, D-65594 Runkel-Ennerich (DE)
(86) Internationale Anmeldenummer: EP9906262
(87) Internationale Veröffentlichungsnummer: WO00016047

(56) Entgegenhaltungen:
- EP-A- 0 801 926
- WO-A-95/14913
- PATENT ABSTRACTS OF JAPAN vol. 1997, no. 07, 31. Juli 1997 (1997-07-31) -& JP 09 084768 A (TERUMO CORP), 31. März 1997 (1997-03-31)
- PATENT ABSTRACTS OF JAPAN vol. 017, no. 258 (P-1540), 20. Mai 1993 (1993-05-20) -& JP 05 001954 A (MATSUSHITA ELECTRIC IND CO LTD), 8. Januar 1993 (1993-01-08)

## Beschreibung

Die Erfindung betrifft ein Verfahren zur Bestimmung einer Temperatur mittels eines Strahlungsthermometers mit mehreren Infrarot-Sensorelementen sowie ein derartiges Thermometer.

Es sind Strahlungsthermometer mit nur einem einzigen Infrarot-Sensorelement bekannt, das mit einem bestimmten Abstand vom Ende eines Lichtleiters angebracht ist. Daher kann nur Strahlung aus einem bestimmten, vom Abstand abhängigen Raumwinkelbereich auf das Sensorelement treffen. So ist beispielsweise die Meßspitze eines Infrarot-Thermometers zur Fiebermessung im Ohr so dimensioniert, daß das Sensorelement nur ein Gesichtsfeld von der ungefähren Größe des Trommelfells hat. Allerdings liegen meistens im Gesichtsfeld des Sensorelements Teile sowohl des Trommelfells als auch des Ohrkanals, die unterschiedliche Temperaturen aufweisen. Daher wird im allgemeinen nicht die Trommelfelltemperatur gemessen, die als das beste Maß für die Körperkemtemperatur gilt, sondern immer nur ein Zwischenwert, der zwischen der Trommelfell- und der Ohrkanaltemperatur liegt. Somit hängt die Genauigkeit einer Temperaturmessung von der Plazierung der Meßspitze im Ohrkanal ab, d.h. vom ihrem Abstand zum Trommelfell und vom Winkel, den sie mit dem Ohrkanal bildet.

Aus der WO 95/14913 ist ein Ohrthermometer bekannt, bei dem am Ende eines Lichtleiters mehrere Sensorelemente so angeordnet sind, daß sie Strahlung aus unterschiedlichen Raumwinkelbereichen aufnehmen. Durch entsprechende Auswertung der von den Sensorelementen gelieferten Signale wird zwar ein Temperaturmeßwert erhalten, der von der Plazierung der Meßspitze im Ohr relativ unabhängig ist, jedoch ebenfalls einen Zwischenwert darstellt, der nicht der Trommelfelltemperatur entspricht.

Aus der JP 09-084768 A ist ein Thermometer zur Messung der Körpertemperatur mit mehreren Infrarotsensoren bekannt, bei dem als Körpertemperatur der höchste von den Infrarotsensoren gemessene Temperaturwert ausgewählt und angezeigt wird.

Aus der JP 05-001954 A ist eine Vorrichtung zur Messung einer Temperaturverteilung in einem Meßraum mittels einer Anordnung von Infrarotsensoren bekannt, bei der der Meßraum in Meßsektoren unterteilt und jeweils die höchste Temperatur innerhalb eines Meßsektors ermittelt wird.

Es ist Aufgabe der Erfindung, ein Verfahren zur Bestimmung einer Temperatur und ein einfach aufgebautes Strahlungsthermometer anzugeben, mit dem selektiv die Temperatur von Objekten meßbar ist, die nur einen Teil des Gesichtsfelds des Strahlungsthermometers ausfüllen, insbesondere die Temperatur des Trommelfells.

Die der vorliegenden Erfindung zugrunde liegende Idee besteht darin, bei der Temperaturbestimmung nur das Temperatursignal des infrarot-Sensorelements zu verwenden, das im Vergleich zu den restlichen Temperatursignalen dem größten/kleinsten Temperaturwert entspricht. Auf diese Weise können beispielsweise bei einem Ohrthermometer zur Fiebermessung die im Gesichtsfeld des Thermometers liegenden kälteren Raumbereiche ausgeblendet werden, d.h. die Bereiche, die erfahrungsgemäß dem Ohrkanal zuzuordnen sind. Für andere Anwendungen können natürlich auch die wärmeren Raumbereiche ausgeblendet werden.

Auch wenn sich das Trommelfell überhaupt nicht im Sichtbereich des Thermometers befindet, liegt die höchste von einem Sensorelement gemessene Temperatur näher an der Trommelfelltemperatur als eine aus allen gemessenen Temperaturen gemittelte Temperatur oder eine mittlere Temperatur, wie sie von einem herkömmlichen Ohrthermometer mit nur einem Sensorelement gemessen würde. Daher ist ein ortsauflösendes Strahlungsthermometer, d.h. ein Thermometer mit mehreren Infrarot-Sensorelementen, die Infrarot-Strahlung aus voneinander verschiedenen Raumbereichen detektieren und entsprechende Temperatursignale abgeben, auch in diesem Fall genauer als ein herkömmliches Thermometer.

Bei Anwendung des erfindungsgemäßen Verfahrens auf die Temperaturbestimmung in einem Ohrthermometer wird also die räumliche Temperaturverteilung im Ohr berücksichtigt, indem die relative Lage des Trommelfells als dem wärmsten Bereich im Gesichtsfeld des Thermometers ermittelt wird, und nur das größte Sensorsignal zur Temperaturbestimmung herangezogen wird. Nimmt das Trommelfell nur einen sehr kleinen Bereich im Gesichtsfeld des Thermometers ein, d.h. unterschreitet die Anzahl der größeren Temperatursignale bezogen auf die Gesamtzahl der Temperatursignale einen bestimmten Schwellwert, wird von einer Auswertungseinrichtung vorteilhafterweise ein Warnsignal ausgegeben, das den Benutzer auffordert, das Thermometer im Ohrkanal besser auszurichten.

Allerdings kann auch ein ortsauflösendes Thermometer dann keinen Bereich mit erhöhter Temperatur mehr ausmachen, wenn die Umgebungstemperatur ungefähr so hoch oder höher ist als die Körpertemperatur, weil dann zwischen der Temperatur des Ohrkanals und des Trommelfells praktisch kein Unterschied mehr vorhanden ist. In diesem Fall könnte daher statt der maximalen Temperatur auch der Mittelwert aller gemessenen Temperaturen bestimmt werden. Daher muß in der Auswertungseinrichtung bei Ausgabe des Warnsignals die Umbebungstemperatur berücksichtigt werden.

Wenn die größeren Temperaturwerte am Rand des Gesichtsfelds des Thermometers liegen, kann vorteilhafterweise ein weiteres Signal ausgegeben werden, insbesondere ein die Richtung anzeigendes Signal, in die ein Benutzer das Thermometer im Ohrkanal schwenken sollte, um die vom Trommelfell ausgehende Infrarot-Strahlung besser zu erfassen.

Die Erfindung wird nachstehend anhand eines Ausführungsbeispiels für ein Verfahren zur Bestimmung einer Temperatur sowie ein Strahlungsthermometer mit mehreren Infrarot-Sensorelementen erläutert, das in der Zeichnung dargestellt ist. Weitere Ausgestaltungen sind in der Beschreibung beschrieben. Die einzige Figur zeigt schematisch eine Meßspitze eines erfindungsgemäßen Ohrthermometers.

Das erfindungsgemäße Verfahren wird am Beispiel eines Infrarot-Ohrthermometers beschrieben, dessen Strahlungssensor eine matrixförmige Anordnung einzelner Sensorelemente Eᵢⱼ aufweist, wobei die Indices i und j die Zeile bzw. Spalte bezeichnen, in der sich das jeweilige Sensorelement befindet. Jedes Sensorelement Eᵢⱼ gibt ein Temperatursignal Sᵢⱼ ab, das einem Temperaturwert Tᵢⱼ entspricht.

Beim erfindungsgemäßen Verfahren wird aus den Temperaturwerten Tᵢⱼ der größte Temperaturwert Tₘₐₓ als Temperaturmeßwert T ausgegeben. Die Bestimmung des Maximalwerts kann sowohl mittels analoger Schaltungen, beispielsweise mit Komparatoren oder Differenzierern und einer Sample and Hold Schaltung, als auch mit digitalen Schaltungen, beispielsweise A/D-Wandlern und entsprechender Software, erfolgen.

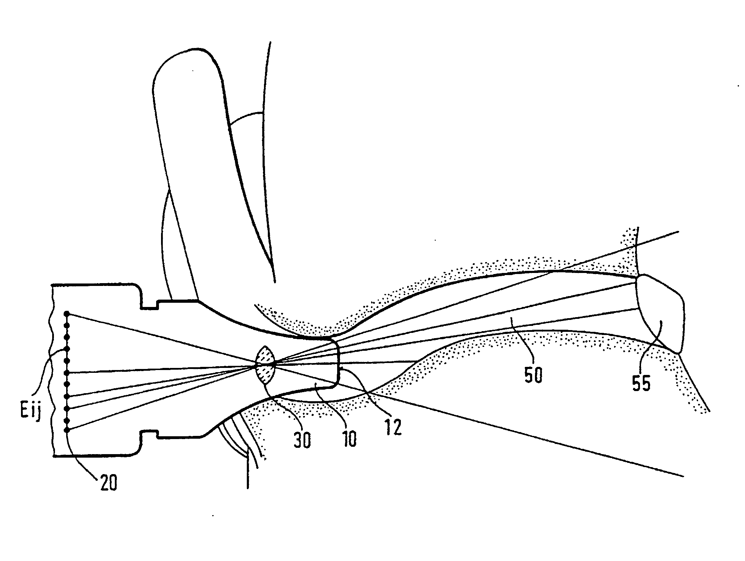

Fig. 2 zeigt schematisch eine Meßspitze 10 eines erfindungsgemäßen Strahlungsthermometers, die teilweise in einen ebenfalls schematisch dargestellten Ohrkanal 50 eingeführt ist, an dessen innerem Ende sich ein Trommelfell 55 befindet. Die Meßspitze 10 enthält einen Infrarot-Sensor 20, der aus mehreren Sensorelementen Eᵢⱼ besteht, die matrixförmig angeordnet sind. Die Meßspitze weist an ihrem Ende eine Öffnung 12 auf, durch die Infrarot-Strahlung ins Innere der Meßspitze gelangen und auf den Sensor 20 auftreffen kann. Ein optisches System, bestehend aus einer Linse 30, ist zwischen dem Sensor 20 und der Öffnung 12 angeordnet. Die Linse 30 bewirkt, daß die im Blickfeld des Thermometers liegenden Bereiche des Ohrkanals oder Trommelfells auf die Sensorelemente abgebildet werden.

Geeignete Linsen aus infrarotdurchlässigem Material bestehen beispielsweise aus Polyethylen, Silizium oder Zinkselenid. Besonders preisgünstig sind Fesnel-Linsen aus Polyethylen. Im einfachsten Fall ist eine einzige Linse ausreichend. Um jedoch einen großen Öffnungswinkel möglichst tief im Ohrkanal zu erhalten, sind Linsensysteme, wie sie aus Endoskopen bekannt sind, besonders vorteilhaft. Als optisches System eignen sich statt Linsen aber auch entsprechend geformte Spiegel, beispielsweise goldbeschichtete Hohlspiegel. Weiterhin möglich sind Bündel von Infrarotlicht leitenden Fasern oder verspiegelten Röhren.

Um die maximale Temperatur im Ohr zu bestimmen, ist es nicht erforderlich, daß das optische System das Trommelfell und den inneren Ohrkanal auf den Infrarot-Sensor abbildet; es reicht aus, das Gesichtsfeld des Strahlungsthermometers mit entsprechend angeordneten optischen Elementen, z. B. Spiegeln, Prismen, Röhren oder Fasem, auf eine eindimensionale Anordnung von Sensorelementen zu projizieren. in diesem Fall läßt sich ein zweidimensionales Bild durch Bewegen des Thermometers im Ohrkanal erhalten.

Zum Nachweis der Infrarotstrahlung eignen sich prinzipiell alle bekannten Infrarotdetektoren, wie beispielsweise Thermopiles, Bolometer, pyroelektrische Sensoren oder auch Halbleitersensoren.

Bei der Auswertung der gemessenen Temperaturverteilung im Ohr lassen sich jedoch auch weitere Informationen gewinnen. Weicht die gemessene Temperaturverteilung deutlich von der normalen Verteilung im Ohr (wärmeres Trommelfell mit kälterem Ohrkanal) ab, kann beispielsweise der Benutzer auf einen Bedienungsfehler aufmerksam gemacht werden.

Strahlungssensoren sind im allgemeinen nicht nur für Strahlungswärme empfindlich, sondem reagieren auch auf Wärme, die über Konvektion oder Wärmeleitung übertragen wird. Um daraus resultierende Meßfehler zu vermeiden, können beispielsweise die Sensorelemente paarweise in Reihe geschaltet werden, wobei jeweils ein Sensorelement der zu messenden Strahlung ausgesetzt wird, das andere jedoch mehr oder weniger stark abgeschirmt ist. Ein entsprechender Sensor ist in der DE 197 10 946.2 beschrieben. Alternativ kann das optische System so ausgelegt sein, daß zumindest ein Sensorelement nicht aufs Meßobjekt, d.h. ins Ohr, sondern auf einen Referenzpunkt, beispielsweise eine Blende, blickt, dessen Temperatur bekannt ist, vgl. EP 0 642 656 B1.

## Patentansprüche

1. Verfahren zur Bestimmung einer Temperatur mittels eines Strahlungsthermometers mit mehreren Infrarot-Sensorelementen, die Infrarot-Strahlung aus voneinander verschiedenen Raumbereichen detektieren und entsprechende Temperatursignale abgeben, insbesondere zur Fiebermessung im Ohr, bei dem zur Temperaturbestimmung nur das Temperatursignal des Sensorelements verwendet wird, das im Vergleich zu den restlichen Sensorelementen den größten Temperaturwert (Tₘₐₓ) liefert,
**dadurch gekennzeichnet,**
**daß** ein Signal ausgegeben werden kann, das die Richtung anzeigt, in die ein Benutzer das Thermometer schwenken soll, wenn die größeren Temperaturwerte am Rand des Gesichtsfelds des Thermometers gemessen werden.

2. Verfahren nach Anspruch 1,
**dadurch gekennzeichnet,**
**daß** ein Warnsignal ausgegeben wird, wenn die Anzahl größerer Temperaturwerte bezogen auf die Gesamtzahl der von den Sensorelementen gelieferten Temperaturwerte einen bestimmten Schwellwert unterschreitet.

3. Verfahren nach Anspruch 2,
**dadurch gekennzeichnet,**
**daß** die Ausgabe des Warnsignals unterbleibt, wenn die Umgebungstemperatur im Bereich der Körpertemperatur liegt oder höher ist.

4. Strahlungsthermometer, insbesondere zur Fiebermessung im Ohr, mit mehreren Infrarot-Sensorelementen zur Detektion von Infrarot-Strahlung aus voneinander verschiedenen Raumbereichen, bei dem zur Temperaturbestimmung nur das Temperatursignal des Sensorelements verwendet wird, das im Vergleich zu den restlichen Sensorelementen den größten Temperaturwert (Tₘₐₓ) liefert,
**dadurch gekennzeichnet,**
**daß** es eine Auswertungseinrichtung für die Temperatursignale der Sensorelemente aufweist, die ein Signal ausgeben kann, das die Richtung anzeigt, in die ein Benutzer das Thermometer schwenken soll, wenn die größeren Temperaturwerte am Rand des Gesichtsfelds des Thermometers gemessen werden.

5. Strahlungsthermometer nach Anspruch 4,
**dadurch gekennzeichnet,**
**daß** es ein optisches System (30) mit mindestens einer Linse, einem Spiegel und/oder mehreren lichtleitenden Fasern oder verspiegelten Röhren aufweist, durch das den einzelnen Sensorelementen (Eᵢⱼ) Infrarot-Strahlung aus voneinander verschiedenen Raumbereichen zuführbar ist.

6. Strahlungsthermometer nach Anspruch 4 oder 5,
**dadurch gekennzeichnet,**
**daß** die Sensorelemente (Eᵢⱼ) zeilenförmig oder matrixförmig angeordnet sind.

7. Strahlungsthermometer nach Anspruch 4, 5 oder 6,
**dadurch gekennzeichnet,**
**daß** zumindest ein Sensorelement vorhanden ist, das gegen vom Meßobjekt ausgehende Infrarotstrahlung abgeschirmt ist.

## Claims

1. A method for determining a temperature by means of a radiation thermometer with multiple infrared sensor elements detecting infrared radiation from different regions and delivering corresponding temperature signals, in particular for taking a patient's temperature in the ear, in which for determining the temperature only the temperature signal of that particular sensor element is used which supplies the peak temperature value (Tₘₐₓ) by comparison with the remaining sensor elements,
**characterized in that** a signal can be produced which indicates the direction in which a user is required to pivot the thermometer when the higher temperature values are measured in the edge region of the thermometer's field of view.

2. The method as claimed in claim 1,
**characterized in that** a warning signal is produced when the number of higher temperature values, related to the aggregate of the temperature values supplied by the sensor elements, drops below a predetermined threshold value.

3. The method as claimed in claim 2,
**characterized in that** the warning signal is not produced when the ambient temperature is within or exceeds the range of the body temperature.

4. A radiation thermometer, in particular for taking a patient's temperature in the ear, with multiple infrared sensor elements for the detection of infrared radiation from different regions, in which for determining the temperature only the temperature signal of that particular sensor element is used which supplies the peak temperature value (Tₘₐₓ) by comparison with the remaining sensor elements,
**characterized in that** it includes an evaluation device for the temperature signals of the sensor elements, which can produce a signal indicating the direction in which a user is required to pivot the thermometer when the higher temperature values are measured in the edge region of the thermometer's field of view.

5. The radiation thermometer as claimed in claim 4,
**characterized in that** it includes an optical system (30) comprising at least a lens, a mirror and/or multiple light guiding fibers or reflector tubes capable of directing infrared radiation from different regions to the individual sensor elements (Eᵢⱼ).

6. The radiation thermometer as claimed in claim 4 or 5,
**characterized in that** the sensor elements (Eᵢⱼ) are arranged in a row or matrix pattern.

7. The radiation thermometer as claimed in claim 4, 5 or 6,
**characterized in that** at least one sensor element is provided which is shielded against infrared radiation emitted by the object of measurement.

## Revendications

1. Procédé pour déterminer une température au moyen d'un thermomètre à rayonnement comportant plusieurs éléments de détection de rayonnement infrarouge, qui détectent un rayonnement infrarouge provenant de zones spatiales différentes les unes des autres et délivrent des signaux de température correspondants, notamment pour la mesure de la température dans l'oreille, selon lequel pour déterminer la température, on utilise uniquement le signal de température de l'élément de détection, qui fournit, par rapport aux autres éléments de détection, la valeur maximale de température (Tₘₐₓ), **caractérisé en ce**
**qu'**un signal peut être délivré, qui indique la direction, dans laquelle un utilisateur doit faire pivoter le thermomètre lorsque les valeurs plus élevées de température sont mesurées sur le bord du champ d'observation du thermomètre.

2. Procédé selon la revendication 1, **caractérisé en ce qu'**un signal d'avertissement est délivré lorsque le nombre de valeurs plus élevées de température rapporté au nombre total des valeurs de température délivrées par les éléments de détection tombe au-dessous d'une valeur de seuil déterminée.

3. Procédé selon la revendication 2, **caractérisé en ce que** la délivrance du signal d'avertissement cesse lorsque la température ambiante est située au voisinage de la température du corps ou est plus élevée.

4. Thermomètre à rayonnement, notamment pour la mesure de la température dans l'oreille, comportant plusieurs éléments de détection de rayonnement infrarouge pour détecter un rayonnement infrarouge provenant de zones spatiales différentes les unes des autres, selon lequel pour la détermination de la température on utilise uniquement le signal de température de l'élément de détection qui fournit, par rapport aux autres éléments de détection, la valeur maximale de température (Tₘₐₓ), **caractérisé en ce que**
qu'il comporte un dispositif d'évaluation des signaux de température des éléments de détection, qui peut délivrer un signal qui indique la direction dans laquelle un utilisateur doit faire pivoter le thermomètre lorsque les valeurs plus élevées de température sont mesurées sur le bord du champ d'observation du thermomètre.

5. Thermomètre à rayonnement selon la revendication 4, **caractérisé en ce qu'**il comporte un système optique (30) possédant au moins une lentille, un miroir et/ou plusieurs fibres conductrices de lumière ou plusieurs tubes métallisés et au moyen duquel le rayonnement infrarouge provenant de zones spatiales différentes les unes des autres peut être envoyé aux différents éléments de détection (Eᵢⱼ).

6. Thermomètre à rayonnement selon la revendication 4 ou 5, **caractérisé en ce que** les éléments de détection (Eᵢⱼ) sont disposés suivant des lignes ou sous la forme d'une matrice.

7. Thermomètre à rayonnement selon la revendication 4, 5 ou 6, **caractérisé en ce qu'**il est prévu au moins un élément de détection, qui est protégé vis-à-vis du rayonnement infrarouge sortant de l'objet de mesure.
